# EUROPEAN PATENT APPLICATION

(11) **EP 4 851 316 A1**
(43) Date of publication of application: **09.12.2026**
(21) Application number: 25748937.7
(22) Date of filing: 31.01.2025
(51) Int. Cl.: C22B 59/00, C01F 17/224, C22B 7/00, C22B 9/10

(54) **RARE EARTH OXIDE RECOVERY METHOD**

(30) Priority: 01.02.2024 JP 2024014088
(71) Applicant: Nissan Motor Co., Ltd., Yokohama-shi, Kanagawa 221-0023 (JP); WASEDA UNIVERSITY, Shinjuku-ku Tokyo 169-8050 (JP)
(72) Inventor: OGAWA, Kazuhiro, Atsugi-shi, Kanagawa 243-0123 (JP); YAMAGUCHI, Katsunori, Tokyo 169-8050 (JP)
(74) Representative: Hoefer & Partner Patentanwälte mbB
(86) International application number: PCT/JP2025/003156
(87) International publication number: WO 2025/164758

(57) **Abstract**

The present disclosure provides a method for recovering a rare earth oxide using a boron-free flux. The present disclosure relates to a method for recovering a rare earth oxide, with which a rare earth oxide is recovered from a waste containing a rare earth element-containing material. The recovery method includes: a melt preparation step (1) of heating and melting the waste together with at least one oxide selected from the group consisting of an alkali metal oxide and an alkaline earth metal oxide, to prepare a melt containing at least a rare earth oxide, the oxide, and an oxide of an easily oxidizable metal; and a separation step (2) of separating, from the melt, a rare earth-enriched phase, in which a rare earth oxide is concentrated in the oxide, and an Fe-C phase.

## Description

### TECHNICAL FIELD

The present invention relates to a method for recovering a rare earth oxide. More particularly, the present invention relates to a method for recovering a rare earth element as a rare earth oxide from a waste containing a rare earth element-containing material.

### BACKGROUND ART

Rare earth elements are used in various products, such as phosphors for displays, fluorescent lamps, sensors, permanent magnets, and fuel cells, and are substances indispensable for the manufacture of high-tech devices such as personal computers, smartphones, and electric vehicles. In recent years, demand for rare earth elements has been increasing with the widespread use of these high-tech devices; however, rare earth elements are produced only in limited regions, their production amounts are small, and their prices have been rising sharply. For this reason, there is a need for the development and improvement of techniques for recovering rare earth elements from rare earth element-containing materials in discarded high-tech devices.

As methods for recovering a rare earth element from a rare earth element-containing material, a wet method in which a target material is dissolved in an acid or a solvent and each rare earth element is separated by solid-liquid separation or solvent extraction; and a dry method in which a target material is heated and melted together with a flux (fluxing agent) and a rare earth oxide is extracted into the flux are known. Among these methods, the wet method has a problem of requiring a large amount of a chemical agent such as an acid or a solvent, and generating a large amount of a waste liquid after a treatment. The wet method also has a problem of requiring a considerable time to elute a rare earth element from a target material into an acid or a solvent. The dry method, on the other hand, is advantageous in that a rare earth element can be readily extracted solely by a step of heating and melting a rare earth element-containing material in the presence of a flux, and in that the generation of a waste liquid or the like can also be suppressed.

As the flux in the dry method, a boron compound such as boron oxide (B₂O₃) or a borate is known. For example, JP 2016-186121 A discloses a method for recovering a rare earth element from a rare earth element-containing material (a method for recovering a rare earth element as an oxide), which includes adding a melting point depressant, an oxidizing agent, and sodium borate to a waste of a product or a semi-finished product containing a rare earth magnet and a steel material, and melting the mixture to separate it into two phases of a REₓO_{y}-B₂O₃-based slag (RE: Nd, Pr, Dy, or Tb) and an Fe-C phase, followed by recovery. According to the document, the use of sodium borate as a flux reduces the viscosity of the slag as compared with a conventional method using boron oxide, thereby enabling a rare earth element to be recovered from the rare earth element-containing material more easily and efficiently.

### SUMMARY OF INVENTION

### Technical Problem

However, boron and a compound thereof are subject to regulation as hazardous substances that may pose a risk to human health, and there has been a demand for reducing the amount of these substances used.

Therefore, an object of the present invention is to provide a method for recovering a rare earth oxide using a boron-free flux.

### Solution to Problem

The present inventors have conducted intensive studies in order to solve the above problem. As a result, the present inventors have found that the above-mentioned problem can be solved in the dry method by using an oxide of an alkali metal or an alkaline earth metal as a flux and allowing an easily oxidizable metal in the system to coexist in the form of an oxide when extracting a rare earth oxide into the flux, and have completed the present invention.

That is, a method for recovering a rare earth oxide according to one embodiment of the present invention is a method for recovering a rare earth oxide, with which a rare earth oxide is recovered from a waste containing a rare earth element-containing material, and includes: a melt preparation step (1) of heating and melting the waste together with at least one oxide selected from the group consisting of an alkali metal oxide and an alkaline earth metal oxide, to prepare a melt containing at least a rare earth oxide, the oxide, and an oxide of an easily oxidizable metal; and a separation step (2) of separating, from the melt, a rare earth-enriched phase, in which a rare earth oxide is concentrated in the oxide, and an Fe-C phase.

### BRIEF DESCRIPTION OF DRAWINGS

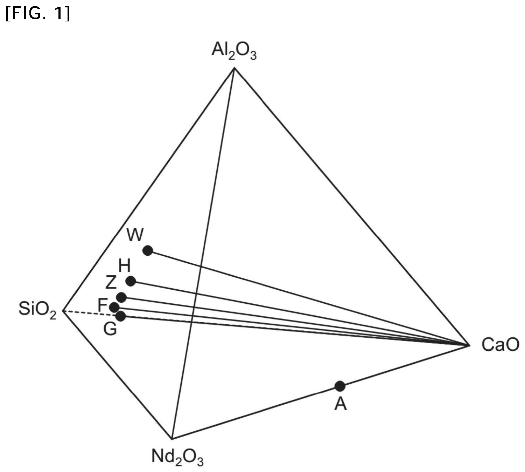

Fig. 1 is a pseudo-quaternary phase diagram at 1450°C in a case where Nd₂O₃ is used as a rare earth element-containing material, Al₂O₃ and SiO₂ are used as oxides of easily oxidizable metals, and calcium oxide (CaO) is used as an oxide.

### DESCRIPTION OF EMBODIMENTS

Hereinafter, embodiments of the present invention will be described, but the technical scope of the present invention should be determined on the basis of the description of the claims, and is not limited only to the following embodiments. "X to Y" indicating a range means "X or more and Y or less".

One embodiment of the present invention is a method for recovering a rare earth oxide, with which a rare earth oxide is recovered from a waste containing a rare earth element-containing material, the method including: a melt preparation step (1) of heating and melting the waste together with at least one oxide selected from the group consisting of an alkali metal oxide and an alkaline earth metal oxide, to prepare a melt containing at least a rare earth oxide, the oxide, and an oxide of an easily oxidizable metal; and a separation step (2) of separating, from the melt, a rare earth-enriched phase, in which a rare earth oxide is concentrated in the oxide, and an Fe-C phase. According to the present embodiment, a method for recovering a rare earth oxide using a boron-free flux is provided.

Hereinafter, each step of the method for recovering a rare earth oxide according to the present embodiment will be described in detail.

### <Melt preparation step (1)>

In this step (1), a waste containing a rare earth element-containing material and at least one oxide selected from the group consisting of an alkali metal oxide and an alkaline earth metal oxide are heated and melted. Thereby, a melt containing at least a rare earth oxide, the oxide, and an oxide of an easily oxidizable metal is prepared.

### [Waste]

The waste contains a rare earth element-containing material. The waste can be a waste of a product or a semi-finished product containing a rare earth element-containing material. The rare earth element-containing material is not particularly limited as long as it contains one or two or more of rare earth elements (that is, scandium, yttrium, lanthanum, cerium, praseodymium, neodymium, promethium, samarium, europium, gadolinium, terbium, dysprosium, holmium, erbium, thulium, ytterbium, and lutetium).

The rare earth element-containing material can take various forms such as a mixture, a compound, a sintered material, an alloy, and a combination thereof. In addition, the rare earth element-containing material can be contained in a product obtained using an alloy containing a rare earth element, a waste of a product or a semi-finished product, and a waste such as a scrap material or a defective product generated in a manufacturing process.

Among the rare earth element-containing materials, a rare earth magnet rich in a rare earth element (including sludge generated in the production process thereof) is preferable. The rare earth magnet is not particularly limited as long as it is a magnet obtained using an alloy containing one or two or more of rare earth elements. Specific examples of the rare earth magnet include a neodymium magnet, a samarium cobalt magnet, a praseodymium magnet, and a samarium iron nitrogen magnet, and among them, a neodymium magnet is preferable. A neodymium magnet obtained using rare metals such as rare earth elements (Nd, Pr, Dy, and Tb) is used in motors for driving and power generation of electric vehicles (EVs) and hybrid electric vehicles (HEVs) that are environmentally friendly vehicles. Rare earth elements are subject to procurement risks, and in Japan, a country with scarce natural resources, where an increase in demand for environmentally friendly vehicles is anticipated, recycling of rare earth elements from neodymium magnets is of great importance. Recycling of rare earth elements from neodymium magnets is advantageous in that it can reduce the procurement risks of rare earth elements. Normally, a neodymium magnet is defined as one of rare earth magnets containing neodymium, iron, and boron as main components. However, in the present description, the neodymium magnet means a magnet defined as a magnet of an R-T-B-based alloy containing R, T, and B (in which R essentially contains at least one selected from the group consisting of Nd, Pr, Dy, and Tb, T is a transition metal essentially containing Fe, and B is boron, a part of which can be substituted with carbon or nitrogen).

The method for recovering a rare earth oxide of the present invention can be applied to a product or a semi-finished product including a rare earth magnet not only in the form of a rare earth magnet alone but also in the form of including a rare earth magnet as one member. For example, a motor, a compressor of an air conditioning facility, and the like, each including a rare earth magnet as one member, are exemplified. The shape of such a product or a semi-finished product including a rare earth magnet may be the shape of the main part of the product or the semi-finished product as it is, or the product or the semi-finished product may be disassembled. It is extremely difficult to remove a rare earth magnet incorporated in a motor from a discarded motor. In contrast, the recovery method according to the present embodiment allows the motor itself to be treated without separating the magnet from the discarded motor. This makes it possible to easily recycle a product or a semi-finished product including a rare earth magnet. In addition, there is no need to pulverize a rare earth magnet in advance. The shape of a waste varies depending on the product type, and in order to take out a rare earth magnet, for example, as described in "Neodymium Magnet Recovery in Home Appliance Recycling" (Association for Electric Home Appliances, November 29, 2011; https://www.meti.go.jp/shingikai/sankoshin/sangyo_gijutsu/haikibutsu_recycle/pdf/016_06_00.pdf), it is necessary to design a rare earth magnet extraction facility in accordance with the shape of the waste. The high cost for this is one of the factors that hinder magnet recycling. According to the recovery method of the present embodiment, separation and recovery can be achieved by adding, to a waste, at least one oxide (flux) selected from the group consisting of an alkali metal oxide and an alkaline earth metal oxide, and optionally an easily oxidizable metal (for example, aluminum or silicon) and/or an oxide thereof, a melting point depressant (for example, carbon), and/or an oxidizing agent (for example, iron oxide), followed by heating and melting, so that it is not necessary to take out the rare earth magnet from the waste, and the method can therefore be said to be highly economical.

Furthermore, in the prior art, demagnetization by heating or the like is performed when treating a rare earth magnet (see, for example, pages 9 to 11 of the above-mentioned "Neodymium Magnet Recovery in Home Appliance Recycling"); however, according to the recovery method of the present embodiment, it is also possible to use a product or a semi-finished product including a rare earth magnet that has not been demagnetized.

Furthermore, some products or semi-finished products are subjected to various plating on the surface of a steel material such as a magnetic steel sheet or a magnet for the purpose of improving rust prevention, corrosion resistance, or the like. Plating is not preferable from the viewpoint of recovery of a rare earth element because impurities increase, and in a conventional method, plating is removed in advance by polishing or the like. However, according to the recovery method of the present embodiment, the waste can be subjected to recovery as it is without removing the plating.

The waste may contain a material other than the rare earth element-containing material. Examples of the material other than the rare earth element-containing material include a steel material and copper. That is, according to a preferred embodiment of the present invention, the waste further contains at least one or both of a steel material and copper.

The steel material includes, for example, a steel sheet, a screw, a product case, chassis, or the like that is integrated with a product and contains iron as a main component. The content of iron is not particularly limited. The steel material may be a magnetic steel material, and may have various compositions including Ni, Cr, Si, Co, or the like. When a rare earth magnet and a steel material are contained, it is possible to achieve separation into two phases, a rare earth enriched phase and an Fe-C phase, by appropriately adjusting the amount of carbon with respect to the total amount of iron therein. On the other hand, when a steel material is not contained, for example, when only a rare earth magnet has iron, it is possible to achieve separation into two phases, a rare earth enriched phase and an Fe-C phase, by appropriately adjusting the amount of carbon with respect to the amount of iron in the rare earth magnet.

In the present embodiment, when the waste contains copper, it is possible to achieve separation into three phases, a rare earth-enriched phase, an Fe-C phase, and a Cu phase. In the prior art, aluminum and silicon are mixed into the Fe-C phase, and it is difficult to efficiently recover only Cu, but according to the recovery method of the present embodiment, the recovery efficiency of Cu can be improved. This point will be described in detail in the column of separation step (2) described later.

### [Alkali metal oxide and/or alkaline earth metal oxide]

In the recovery method according to the present embodiment, at least one oxide selected from the group consisting of an alkali metal oxide and an alkaline earth metal oxide (hereinafter also simply referred to as "oxide (AMO/AEMO)") is used as a flux.

Examples of the alkali metal oxide and the alkaline earth metal oxide include sodium oxide (Na₂O), lithium oxide (Li₂O), potassium oxide (K₂O), rubidium oxide (Rb₂O), cesium oxide (Cs₂O), barium oxide (BaO), magnesium oxide (MgO), calcium oxide (CaO), strontium oxide (SrO), and the like. Among them, sodium oxide (Na₂O), barium oxide (BaO), and calcium oxide (CaO) are preferable, and calcium oxide (CaO) is more preferable from the viewpoint of low reducibility.

The amount of the oxide (AMO/AEMO) added (referring to the total amount when two or more oxides are used) may be any amount sufficient for the rare earth element contained in the rare earth element-containing material and the oxide of the easily oxidizable metal to form a homogeneous melt (liquid phase region). In other words, the amount of the oxide (AMO/AEMO) added is an amount equal to or greater than the liquidus in a phase diagram determined by the rare earth oxide mass of the rare earth element-containing material and the content of the oxide of the easily oxidizable metal. Here, in the present description, the "rare earth oxide mass of the rare earth element-containing material" refers to the total mass of rare earth oxides when rare earth elements (for example, Nd, Pr, Dy, and Tb) contained in the rare earth element-containing material (for example, rare earth magnet) are assumed to have been oxidized to rare earth oxides (for example, Nd₂O₃, Pr₂O₃, Dy₂O₃, and Tb₂O₃). The content of the oxide of the easily oxidizable metal refers to the content of each type of oxide. For example, when only Al₂O₃ is contained as the oxide of the easily oxidizable metal, the content of the oxide of the easily oxidizable metal refers to the content of Al₂O₃. When Al₂O₃ and SiO₂ are contained as the oxide of the easily oxidizable metal, the content of the oxide of the easily oxidizable metal refers to the content of each of Al₂O₃ and SiO₂.

Hereinafter, the "amount equal to or greater than the liquidus in a phase diagram determined by the rare earth oxide mass of the rare earth element-containing material and the content of the oxide of the easily oxidizable metal" will be described with reference to Fig. 1. Fig. 1 is a pseudo-quaternary phase diagram at 1450°C in a case where Nd₂O₃ is used as the rare earth element-containing material, Al₂O₃ and SiO₂ are used as oxides of easily oxidizable metals, and calcium oxide (CaO) is used as the oxide (AMO/AEMO). Each edge of the regular tetrahedron shown in Fig. 1 represents the concentrations of four components. For example, in the regular tetrahedron shown in Fig. 1, the edge having Nd₂O₃ and CaO as vertices is considered. The composition ratio (mass ratio) of Nd₂O₃ : CaO at an arbitrary point A on this edge corresponds to "the distance from point A to the vertex (CaO)" : "the distance from point A to the vertex (Nd₂O₃)" (lever rule). Here, each edge of the equilateral triangle located on the left side of the regular tetrahedron represents the concentrations of Nd₂O₃, Al₂O₃, and SiO₂, and a single point shown on the plane of the equilateral triangle (for example, point W) indicates the composition of these three components. More specifically, in the regular tetrahedron shown in Fig. 1, the equilateral triangle having Nd₂O₃, Al₂O₃, and SiO₂ as vertices is considered. The composition ratio (mass ratio) of Nd₂O₃ : Al₂O₃ : SiO₂ at point W on this plane corresponds to "the perpendicular distance from the line segment connecting Al₂O₃ and SiO₂ to point W" : "the perpendicular distance from the line segment connecting Nd₂O₃ and SiO₂ to point W" : "the perpendicular distance from the line segment connecting Nd₂O₃ and Al₂O₃ to point W." The composition of the three components is uniquely determined by the amounts of Nd₂O₃, Al₂O₃, and SiO₂ added in this step (1). A straight line drawn from point W toward the vertex (CaO) represents the concentrations of the three components and CaO when CaO is added to the composition of the three components indicated by point W. This means that the concentration of CaO increases as the vertex (CaO) is approached. When the concentration of CaO is increased with respect to the composition of the three components indicated by point W, transition occurs from a solid-liquid phase mixed region to a liquid phase region (a region in which a homogeneous melt is formed) at a certain concentration. The boundary at which transition occurs from the solid-liquid phase mixed region to the liquid phase region is referred to as "liquidus," and on the liquidus, a liquid phase and a portion of a solid phase are ordinarily present in equilibrium. In the pseudo-quaternary phase diagram shown in Fig. 1, the boundary between the solid-liquid phase mixed region and the liquid phase region exists as a plane, and a boundary in such a case may also be referred to as "liquidus plane". However, in the present description, regardless of whether the boundary is a line or a plane, the terms shall be collectively referred to as "liquidus". The content of the oxide (AMO/AEMO) being "an amount equal to or greater than the liquidus" means that it is a concentration corresponding to the liquidus or is a concentration in the liquid phase region. In the case shown in Fig. 1, the "amount equal to or greater than the liquidus" corresponds to the CaO concentration represented by the line segment connecting the intersection (not shown) of the straight line and the liquidus to the vertex (CaO) (excluding the vertex (CaO) itself).

In the above description, the "amount equal to or greater than the liquidus in a phase diagram determined by the rare earth oxide mass of the rare earth element-containing material and the content of the oxide of the easily oxidizable metal" has been explained using the pseudo-quaternary phase diagram; however, the "amount equal to or greater than the liquidus" can be determined without forming a phase diagram. That is, by determining in advance the rare earth oxide mass of the rare earth element-containing material and the content of the oxide of the easily oxidizable metal that may be present in the system, the concentration of the oxide (AMO/AEMO) corresponding to the liquidus can be experimentally determined by increasing the concentration of the oxide (AMO/AEMO) with respect to this composition. This makes it possible to ascertain the composition that forms a homogeneous melt regardless of the composition of the rare earth element contained in the rare earth element-containing material and the easily oxidizable metal (oxide). Therefore, the recovery method according to the present embodiment can be applied to wastes having various elemental compositions.

### [Easily oxidizable metal and/or oxide thereof]

In this step (1), an easily oxidizable metal and/or an oxide thereof can be added in addition to the waste containing the rare earth element-containing material and the oxide (AMO/AEMO) described above. In the present description, the term "easily oxidizable metal" refers to a metal or a metalloid that is more easily oxidized than the oxidizing agent described below (for example, iron oxide (Fe₂O₃)). Examples of the easily oxidizable metal include aluminum (Al), silicon (Si), titanium (Ti), zirconium (Zr), and the like. Among them, from the viewpoint of improving the phase separation property, the easily oxidizable metal is preferably at least one or both of aluminum (Al) and/or silicon (Si), and more preferably aluminum (Al) and silicon (Si) are used in combination. In addition, they may be added in the form of oxides of these easily oxidizable metals. Examples of the oxide of the easily oxidizable metal include aluminum oxide (Al₂O₃: alumina), silicon dioxide (SiO₂: silica), titanium oxide (TiO₂: titania), zirconium oxide (ZrO₂: zirconia), and the like. Among them, from the viewpoint of improving the phase separation property, it is preferable to use at least one or both of aluminum oxide (Al₂O₃: alumina) and/or silicon dioxide (SiO₂: silica), and it is more preferable to use aluminum oxide (Al₂O₃: alumina) and silicon dioxide (SiO₂: silica) in combination. When a sufficient amount of the easily oxidizable metal and/or the oxide thereof is contained in the waste containing the rare earth element-containing material, no additional addition is required. Thus, according to a preferred embodiment, the waste contains a rare earth element-containing material and an easily oxidizable metal. According to a more preferred embodiment, the waste contains a rare earth element-containing material, aluminum, and silicon.

### [Melting point depressant]

The waste can contain a large amount of iron element. For example, the waste motor contains a very large amount of iron element derived from the electromagnetic steel sheet portion of the motor as compared with the rare earth magnet alone. When the waste contains a large amount of iron element, since the melting point of iron is as high as 1538°C, it is preferable to melt the waste in the presence of a melting point depressant in view of the efficiency of phase separation and the reduction of energy during melting. As the melting point depressant, carbon is preferably used. Since carbon has an effect of preventing oxidation of iron and preventing iron from migrating into the rare earth-enriched phase, the separation property can be improved. As the carbon supply source, the use of a carbon crucible in a heating furnace (melting furnace), carbon coating of a furnace wall, addition of an Fe-C alloy such as pig iron, coke, graphite, a commercially available carbon additive, a plastic, an organic substance, or the like as an additive to the reaction system, and the like are exemplified. In addition, for example, blowing a gaseous carbon source such as carbon dioxide or a hydrocarbon-based gas, and the like are exemplified. Furthermore, as described below, in a case where carbon is used as the melting point depressant, high-purity iron such as electrolytic iron added for the purpose of forming an Fe-C alloy is also included in the melting point depressant. In addition, as described above, when a heating furnace or its furnace wall is used as a carbon supply source (melting point depressant), the carbonaceous material on the surface of the furnace wall dissolves into the melt in which the waste and the like have been melted, thereby taking a form in which it is added as the melting point depressant.

When a melting point depressant is added to a waste of an electromagnetic steel sheet containing a rare earth magnet, followed by heating and melting, electrolytic iron can be added. Electrolytic iron is not necessarily required when an electromagnetic steel sheet containing a rare earth magnet is heated and melted at a high temperature of 1500°C or higher, but when carbon is added as the melting point depressant, electrolytic iron reacts with carbon in the melting point depressant to form an Fe-C alloy. As described above, by forming an Fe-C alloy that melts at a temperature of about 1200°C prior to the heating and melting of the electromagnetic steel sheet, the melting of the electromagnetic steel sheet is promoted, and the molten state of the electromagnetic steel sheet can be achieved in a shorter time and at a lower temperature.

The amount of such a melting point depressant added is preferably close to the eutectic point composition because the lowest melting temperature is achieved. When carbon is used as the melting point depressant, it is preferable to perform heating and melting in a carbon-saturated state, that is, a state in which no further carbon dissolves into the melt, from the viewpoint of melting point depression and oxidation prevention effect. As a general indication, it is considered that the amount of the melting point depressant added is in the range of 5 mass% to 10 mass% with respect to the amount of iron element in the waste. The above range is merely an indication for a case where the melting point depressant is added to the reaction system as an additive in the form of an Fe-C alloy such as pig iron, coke, graphite, a commercially available carbon additive, a plastic, an organic substance, or the like, or a case where a gaseous carbon source such as carbon dioxide or a hydrocarbon-based gas is blown into the system. When a carbon crucible or a furnace wall coated with carbon is used or used in combination as a carbon supply source as the melting point depressant, the above range is not restrictive. However, when a part of such a heating furnace (melting furnace) is used as a carbon source, it is preferable to use another carbon source, because periodic repair of the furnace wall or replacement of the crucible is necessary.

### [Oxidizing agent]

In the recovery method according to the present embodiment, since phase separation is performed after converting a rare earth element contained in the rare earth element-containing material into the form of a rare earth oxide, an oxidizing agent for oxidizing the rare earth element can be added in this step (1). When an easily oxidizable metal (for example, Al and/or Si) is contained, phase separation is performed after conversion into the form of an easily oxidizable metal oxide by an oxidizing agent. Here, it is preferable that at least 90 mol% or more of the easily oxidizable metal in the system is converted into the form of an easily oxidizable metal oxide, it is more preferable that 95 mol% or more is converted into the form of an easily oxidizable metal oxide, it is still more preferable that 99 mol% or more is converted into the form of an easily oxidizable metal oxide, and it is preferable that 100 mol% is converted into the form of an easily oxidizable metal oxide. By increasing the proportion of the form of the oxide, the amount of the oxide (AMO/AEMO) used can be further reduced (in particular, it is possible to more effectively suppress an increase in the amount of use associated with reduction of the oxide (AMO/AEMO) described later). In addition, the easily oxidizable metal can be recovered more efficiently. The oxidizing agent can supply oxygen sufficient for oxidation of the rare earth element and the easily oxidizable metal by being added to the heated and melted rare earth element-containing material and easily oxidizable metal. It is preferable to promote the oxidation of the rare earth element and the easily oxidizable metal from the viewpoint of improving the phase separation property and the recovery rate of the rare earth oxide.

Examples of the oxidizing agent include oxidizing gases such as air, oxygen, and carbon dioxide, iron oxide, a composite oxide containing iron oxide, and the like. Among them, iron oxide is preferable because it not only supplies oxygen sufficient for the oxidation of the rare earth element and the easily oxidizable metal, but also reduces impurities in the recovered iron.

The amount of iron oxide added is preferably set such that the molar ratio of oxygen is 1.5 to 2.0 times the amount of the rare earth element in the rare earth element-containing material (for example, a rare earth magnet) in the waste and the amount of the easily oxidizable metal. When iron oxide is not added in an inert atmosphere, the added oxide (AMO/AEMO) reacts with the rare earth element in the magnet and is reduced, and the function as a flux may be deteriorated. Therefore, when iron oxide is not added, it is preferable to perform this step (1) in the presence of an oxidizing gas such as air, oxygen, or carbon dioxide.

In the recovery method according to the present embodiment, since boron and a compound thereof are regulated as hazardous substances as described above, it is preferable to avoid using them as much as possible. That is, it is preferable that the step (1) does not include adding a boron-containing substance other than the waste. In addition, the content of boron (B) contained in the melt is preferably small. That is, the content of boron (B) in the melt is preferably 4.3 mass% or less with respect to the total mass of the rare earth element. This makes it possible to reduce boron in the waste liquid discharged when the oxide of the rare earth element is recovered from the rare earth-enriched phase in steps (3a) to (3c) described later. When boron is contained in the waste, the melt contains boron derived from the waste. The content of boron (B) in the melt in such a case may be 2.4 mass% or more and 4.3 mass% or less with respect to the total mass of the rare earth element.

In this step (1), as described above, the waste containing the rare earth element-containing material and the oxide (AMO/AEMO) are heated and melted. The heating temperature at this time is preferably 1250°C to 1700°C. When the temperature is 1250°C or higher, a homogeneous melt (liquid phase region) is easily formed. In addition, the heating temperature is preferably 1700°C or lower from the viewpoint of the durability of a refractory used in the melting furnace used for heating and melting. From the viewpoint of further improving the two-phase separation property between the rare earth-enriched phase and the Fe-C phase, the heating temperature is more preferably 1400°C to 1600°C. When the heating temperature is 1400°C or higher, the rare earth element-containing material (for example, a rare earth magnet) is more easily melted. In addition, since the melting point of pure iron is 1535°C and separation of the rare earth-enriched phase and the Fe-C phase by density difference is facilitated by pouring, the heating temperature is more preferably 1600°C or lower.

It is preferable to avoid heating to a temperature higher than the above temperature range, because doing so deteriorates the two-phase separation property. However, temporarily heating to a temperature higher than the above temperature range before the temperature is held within the range is effective for dissolving out the rare earth element mixed into a high melting point substance such as iron. Therefore, as a temperature change during heating and melting, there is a case where heating is performed to the above temperature range suitable for two-phase separation and then cooling is performed. In addition, in order to form a homogeneous melt, heating may be performed to a temperature higher than the above temperature range more suitable for two-phase separation (for example, higher than 1600°C and 1700°C or lower), then the temperature may be lowered and held in the above temperature range more suitable for two-phase separation, and then cooling may be performed.

From the viewpoint of improving the phase separation property, it is preferable to hold the melt obtained by heating and melting in the above temperature range for 10 minutes or more, and more preferably 60 minutes or more. However, since no effect exceeding the theoretical distribution ratio is produced even if the holding time is too long, the holding time is preferably 180 minutes or less in consideration of economic efficiency.

The preferred heating temperature range when the waste further contains copper and is separated into three phases, a rare earth-enriched phase, an Fe-C phase, and a Cu phase, is also similar to that described above.

It is preferable that this step (1) sequentially includes steps (1a) to (1c) below:
step (1a): adding a melting point depressant to the waste containing a rare earth element-containing material, aluminum, and silicon, followed by heating and melting to obtain a melt (1a);
step (1b): bringing an oxidizing agent into contact with the melt (1a) to obtain a melt (1b); and
step (1c): adding the oxide (AMO/AEMO) to the melt (1b) to obtain a melt (1c).

According to these steps (1a) to (1c), a melt suitable for phase separation can be prepared by a simpler operation.

The melt obtained in this step (1) contains at least a rare earth oxide, an oxide (AMO/AEMO), and an oxide of an easily oxidizable metal. Here, when the oxide of the easily oxidizable metal is aluminum oxide and silicon dioxide, and the oxide (AMO/AEMO) is calcium oxide (CaO), the composition of these components is preferably in the following range. With respect to the total sum of the rare earth oxide mass of the rare earth element-containing material, the content of the oxide of the easily oxidizable metal, and the content of the oxide (AMO/AEMO), the proportion of the content of aluminum oxide is 15.7 to 17.5 mass%, the proportion of the content of silicon dioxide is 50.0 to 55.9 mass%, and the proportion of the content of the oxide (AMO/AEMO) is 5.0 to 15.0 mass%; with respect to the total sum of the rare earth oxide mass of the rare earth element-containing material, the content of the oxide of the easily oxidizable metal, and the content of the oxide (AMO/AEMO), the proportion of the content of aluminum oxide is 27.5 to 29.3 mass%, the proportion of the content of silicon dioxide is 32.1 to 34.2 mass%, and the proportion of the content of the oxide (AMO/AEMO) is 20.0 to 25.0 mass%; with respect to the total sum of the rare earth oxide mass of the rare earth element-containing material, the content of the oxide of the easily oxidizable metal, and the content of the oxide (AMO/AEMO), the proportion of the content of aluminum oxide is 10.9 to 11.4 mass%, the proportion of the content of silicon dioxide is 46.4 to 48.5 mass%, and the proportion of the content of the oxide (AMO/AEMO) is 14.0 to 17.7 mass%; with respect to the total sum of the rare earth oxide mass of the rare earth element-containing material, the content of the oxide of the easily oxidizable metal, and the content of the oxide (AMO/AEMO), the proportion of the content of aluminum oxide is 11.6 to 12.9 mass%, the proportion of the content of silicon dioxide is 49.5 to 54.9 mass%, and the proportion of the content of the oxide (AMO/AEMO) is 10.0 to 18.9 mass%; and with respect to the total sum of the rare earth oxide mass of the rare earth element-containing material, the content of the oxide of the easily oxidizable metal, and the content of the oxide (AMO/AEMO), the proportion of the content of aluminum oxide is 17.0 to 22.5 mass%, the proportion of the content of silicon dioxide is 35.9 to 47.6 mass%, and the proportion of the content of the oxide (AMO/AEMO) is 10.0 to 32.1 mass%. By adding a rare earth element-containing material, an oxide (AMO/AEMO), and an easily oxidizable metal or an oxide thereof so as to have such a composition, a homogeneous melt can be more easily obtained.

### <Separation step (2)>

In this step (2), the rare earth-enriched phase, in which the rare earth element is concentrated in the oxide (AMO/AEMO), and the Fe-C phase are separated from the melt obtained in the step (1). In the state of a melt, the Fe-C phase having a relatively high density separates into the lower layer, and the rare earth-enriched phase having a relatively low density separates into the upper layer. Here, in addition to the rare earth oxide extracted by the oxide (AMO/AEMO), the rare earth enriched phase can also contain the oxide of the easily oxidizable metal (for example, Al₂O₃ and/or SiO₂). According to the recovery method of the present embodiment, when the rare earth oxide is extracted into the oxide (AMO/AEMO) as a flux, by allowing the oxide of the easily oxidizable metal to coexist, a homogeneous melt can be obtained without using a boron compound such as boron oxide (B₂O₃) or a borate as in the prior art.

After the rare earth-enriched phase and the Fe-C phase are formed, each phase can be separated and recovered by subjecting each phase to liquid separation while being in a liquid phase state. According to the recovery method of the present embodiment, since the rare earth-enriched phase has a low viscosity by using the oxide (AMO/AEMO) as a flux, the rare earth-enriched phase can be taken out from the upper part of the furnace by pouring, and separation is easy.

As the liquid separation method, there is a method of discharging the phases from the bottom of the furnace in order of decreasing density. As yet another method, the melt may be cooled and solidified, and then cut along the phase boundary using a cutter or the like. When cooling, it is preferable to perform slow cooling until solidification in order to enhance the separation property, but rapid cooling to solidification is also possible.

When the waste contains copper, the melt is separated into three phases, a rare earth-enriched phase, an Fe-C phase, and a Cu phase. That is, according to a preferred embodiment of the present invention, the waste further contains copper, and in the separation step (2), a rare earth-enriched phase in which a rare earth element is concentrated in the oxide (AMO/AEMO), an Fe-C phase, and a Cu phase are separated from the melt. When the melt contains copper, the melt is separated into a rare earth-enriched phase (upper layer), an Fe-C phase (middle layer), and a Cu phase (lower layer) in order of increasing density. As in the case of two-phase separation, these phases can be taken out by any of the following methods: pouring, discharging from the bottom of the furnace, or solidifying and cutting. As in the prior art, when the easily oxidizable metal (aluminum or silicon) is not converted into the form of an oxide, the easily oxidizable metal is contained in the Fe-C phase, which may make it difficult to separate the Fe-C phase from the Cu phase. According to the recovery method of the present embodiment, by converting the easily oxidizable metal into the form of an oxide, the oxide of the easily oxidizable metal is incorporated in the rare earth-enriched phase. As a result, the Fe-C phase contains almost no easily oxidizable metals, and therefore the phase separation property between the Fe-C phase and the Cu phase is improved, and it has become possible to recover Cu efficiently. Therefore, in this respect as well, the recovery method according to the present embodiment has advantageous effects as compared with the prior art.

The rare earth-enriched phase (rare earth-enriched material) separated in the separation step (2) contains a rare earth oxide, an oxide of an easily oxidizable metal, and the oxide (AMO/AEMO). That is, according to another embodiment of the present invention, a rare earth-enriched material containing a rare earth oxide, an oxide of an easily oxidizable metal, and at least one oxide selected from the group consisting of an alkali metal oxide and an alkaline earth metal oxide is provided. In addition, according to the present invention, since a rare earth-enriched phase (rare earth-enriched material) is obtained using a boron-free flux, there is a feature that the content of boron in the rare earth-enriched material is small. This makes it possible to reduce boron in the waste liquid discharged when the oxide of the rare earth element is recovered from the rare earth-enriched material in steps (3a) to (3c) described later. According to an embodiment of the present invention, the content of boron in the rare earth-enriched material is preferably 4.3 mass% or less and can be 2.4 mass% or more and 4.3 mass% or less with respect to the total mass of the rare earth element.

### <Steps (3a) to (3c)>

The recovery method according to the present embodiment may further include steps (3a) to (3c) of recovering a rare earth oxide from the rare earth-enriched phase after the separation step (2). That is, according to a preferred embodiment of the present invention, the method includes steps (3a) to (3c) below sequentially after the separation step (2):
step (3a): subjecting the rare earth-enriched phase obtained in the step (2) to a leaching treatment with an acid to obtain a rare earth element leachate;
step (3b): precipitating a rare earth element in the rare earth element leachate as a salt to obtain a precipitate; and
step (3c): heating the precipitate to recover the rare earth element as an oxide.

Examples of the acid used in the leaching treatment in the step (3a) include oxalic acid, hydrochloric acid, sulfuric acid, and the like. After acid leaching is performed in the step (3a) to dissolve the rare earth element, an alkali (for example, ammonium hydroxide, ammonium sulfate, or sodium hydroxide) is added in the step (3b) to adjust the pH (for example, pH 1.5 to 2) to deposit a precipitate (a salt of the rare earth element). At this time, the component derived from the oxide (AMO/AEMO) remains dissolved in the leachate, and therefore it is possible to recover the precipitate (the salt of the rare earth element) by solid-liquid separation. Thereafter, in the step (3c), the precipitate (the salt of the rare earth element) is fired at 600°C to 1000°C for 30 minutes to 90 minutes, whereby the precipitate can be recovered as a rare earth oxide.

Furthermore, in the recovery method according to the present embodiment, after the steps (3a) to (3c), the obtained rare earth oxide can also be reduced to a simple substance of a rare earth element and recovered by a known method for reducing a rare earth oxide to a metal, such as a molten salt electrolysis method (a molten salt reduction method) or a Ca reduction method (a calcium reduction method).

Note that the following embodiments are also included in the scope of the present invention: the recovery method according to claim 1 having the features of claim 2; the recovery method according to claim 1 or 2 having the features of claim 3; the recovery method according to any one of claims 1 to 3 having the features of claim 4; the recovery method according to any one of claims 1 to 4 having the features of claim 5; the recovery method according to any one of claims 1 to 5 having the features of claim 6; the recovery method according to any one of claims 1 to 6 having the features of claim 7; the recovery method according to any one of claims 1 to 7 having the features of claim 8; the recovery method according to any one of claims 1 to 8 having the features of claim 9; the recovery method according to claim 6 having the features of claim 10; the recovery method according to claim 6 having the features of claim 11; the recovery method according to claim 6 having the features of claim 12; the recovery method according to claim 6 having the features of claim 13; the recovery method according to claim 6 having the features of claim 14; the recovery method according to any one of claims 1 to 14 having the features of claim 15; the recovery method according to claim 15 having the features of claim 16; the recovery method according to any one of claims 1 to 16 having the features of claim 17; and the rare earth-enriched material according to claim 18 having the features of claim 19.

### Examples

Hereinafter, the present invention will be described in more detail with reference to examples. However, the technical scope of the present invention is not limited only to the following examples.

### <Confirmation of liquidus>

### [Reference Example 1]

A mixture (1 g in total) obtained by mixing 0.155 g of Nd₂O₃ having a purity of 99.9 mass%, 0.250 g of CaO, 0.274 g of Al₂O₃, and 0.321 g of SiO₂ was used as a sample of this reference example. The mass ratio of Nd₂O₃, Al₂O₃, and SiO₂ in the mixture is Nd₂O₃ : Al₂O₃ : SiO₂ = 20.6 : 36.6 : 42.8. This sample was inserted into an iron crucible having an inner diameter of 8 mm, a thickness of 1 mm, and a height of 50 mm, and heated and held at 1450°C in an air atmosphere for 24 hours in a Kanthal furnace. The sample held for a predetermined time was rapidly cooled by water cooling. The rapidly cooled sample was subjected to microstructural observation with an optical microscope and a scanning electron microscope (SEM), and phase identification with an X-ray diffractometer (XRD). Based on these results, the ability of the CaO flux to dissolve Nd₂O₃ was examined. As a result, since only a vitrified microstructure formed by cooling of the homogeneous melt was observed in the rapidly cooled sample, it was confirmed that the sample of this reference example formed a homogeneous melt at a high temperature.

### [Reference Examples 2 to 4 and Comparative Reference Examples 1 to 4]

A mixture (1 g in total) obtained by weighing Nd₂O₃ having a purity of 99.9 mass%, CaO, Al₂O₃, and SiO₂ so as to have the composition shown in Table 1 below, followed by mixing was used as a sample of each example. In Reference Examples 2 to 4 and Comparative Reference Examples 1 to 4, the mass ratio of Nd₂O₃, Al₂O₃, and SiO₂ was substantially the same as the mass ratio in Reference Example 1 (error ± 0.1 mass%). This sample was inserted into an iron crucible having an inner diameter of 8 mm, a thickness of 1 mm, and a height of 50 mm, and heated and held at 1400°C or 1450°C (see Table 1) in an air atmosphere for 24 hours in a Kanthal furnace. The sample held for a predetermined time was rapidly cooled by water cooling. The rapidly cooled sample was subjected to microstructural observation with an optical microscope and SEM, and phase identification with XRD. Based on these results, the ability of the CaO flux to dissolve Nd₂O₃ was examined. Whether or not only a vitrified microstructure formed by cooling of the homogeneous melt was observed in the rapidly cooled sample was used to determine whether the homogeneous melt was formed at a high temperature or whether the sample was in a mixed state of a liquid phase and a solid phase. The results are shown in Table 1 below. In the following, "L" in the table represents a sample in which a homogeneous melt was formed, and "L+S" represents a sample that was in a mixed state of a liquid phase and a solid phase.

### [Table 1]

**Table 1**

| | Temperature (°C) | Nd₂O₃ (mass%) | CaO (mass%) | Al₂O₃ (mass%) | SiO₂ (mass%) | State |
|---|---|---|---|---|---|---|
| Reference Example 1 | 1450 | 15.5 | 25.0 | 27.4 | 32.1 | L |
| Reference Example 2 | 1450 | 16.5 | 20.0 | 29.3 | 34.2 | L |
| Comparative Reference Example 1 | 1450 | 17.5 | 15.0 | 31.1 | 36.4 | L+S |
| Comparative Reference Example 2 | 1450 | 20.6 | 0.0 | 36.6 | 42.8 | L+S |
| Reference Example 3 | 1400 | 15.5 | 25.0 | 27.4 | 32.1 | L |
| Reference Example 4 | 1400 | 15.8 | 23.5 | 28.0 | 32.7 | L |
| Comparative Reference Example 3 | 1400 | 16.0 | 22.5 | 28.4 | 33.2 | L+S |
| Comparative Reference Example 4 | 1400 | 20.6 | 0.0 | 36.6 | 42.8 | L+S |

From the results shown in Table 1, it is found that when the mass ratio of Nd₂O₃, Al₂O₃, and SiO₂ is Nd₂O₃ : Al₂O₃ : SiO₂ = 20.6 : 36.6 : 42.8 and the temperature of the melt is 1450°C, the liquidus exists within a range where the proportion of CaO to the total mass of Nd₂O₃, CaO, Al₂O₃, and SiO₂ is more than 15.0 mass% and 20.0 mass% or less. Therefore, it was confirmed that a homogeneous melt is formed when the proportion of CaO is at least 20.0 mass% or more (the proportion of the mass of CaO to the total mass of Nd₂O₃ and CaO is at least 54.8 mass% or more) at the composition and the temperature.

Further, from the results shown in Table 1, it is found that when the mass ratio of Nd₂O₃, Al₂O₃, and SiO₂ is Nd₂O₃ : Al₂O₃ : SiO₂ = 20.6 : 36.6 : 42.8 and the temperature of the melt is 1400°C, the liquidus exists within a range where the proportion of CaO to the total mass of Nd₂O₃, CaO, Al₂O₃, and SiO₂ is more than 22.5 mass% and 23.5 mass% or less. Therefore, it was confirmed that a homogeneous melt is formed when the proportion of CaO is at least 23.5 mass% or more (the proportion of the mass of CaO to the total mass of Nd₂O₃ and CaO is at least 59.8 mass% or more) at the composition and the temperature. The compositions in Reference Examples 1 to 4 and Comparative Reference Examples 1 to 4 correspond to compositions on the line segment connecting point W and the vertex (CaO) in the pseudo-quaternary phase diagram shown in Fig. 1.

### [Reference Example 5]

A mixture (1 g in total) obtained by mixing 0.204 g of Nd₂O₃ having a purity of 99.9 mass%, 0.100 g of CaO, 0.166 g of Al₂O₃, and 0.530 g of SiO₂ was used as a sample of this reference example. The mass ratio of Nd₂O₃, Al₂O₃, and SiO₂ is Nd₂O₃ : Al₂O₃ : SiO₂ = 22.7 : 18.4 : 58.9. This sample was inserted into an iron crucible having an inner diameter of 8 mm, a thickness of 1 mm, and a height of 50 mm, and heated and held at 1450°C in an air atmosphere for 24 hours in a Kanthal furnace. The sample held for a predetermined time was rapidly cooled by water cooling. The rapidly cooled sample was subjected to microstructural observation with an optical microscope and a scanning electron microscope (SEM), and phase identification with an X-ray diffractometer (XRD). Based on these results, the ability of the CaO flux to dissolve Nd₂O₃ was examined. As a result, since only a vitrified microstructure formed by cooling of the homogeneous melt was observed in the rapidly cooled sample, it was confirmed that the sample of this reference example formed a homogeneous melt at a high temperature.

### [Reference Examples 6 to 8 and Comparative Reference Examples 5 to 7]

A mixture (1 g in total) obtained by weighing Nd₂O₃ having a purity of 99.9 mass%, CaO, Al₂O₃, and SiO₂ so as to have the composition shown in Table 2 below, followed by mixing was used as a sample of each example. In Reference Examples 6 to 8 and Comparative Reference Examples 5 to 7, the mass ratio of Nd₂O₃, Al₂O₃, and SiO₂ was substantially the same as the mass ratio in Reference Example 5 (error ± 0.1 mass%). This sample was inserted into an iron crucible having an inner diameter of 8 mm, a thickness of 1 mm, and a height of 50 mm, and heated and held at 1400°C or 1450°C (see Table 2) in an air atmosphere for 24 hours in a Kanthal furnace. The sample held for a predetermined time was rapidly cooled by water cooling. The rapidly cooled sample was subjected to microstructural observation with an optical microscope and SEM, and phase identification with XRD. Based on these results, the ability of the CaO flux to dissolve Nd₂O₃ was examined. Whether or not only a vitrified microstructure formed by cooling of the homogeneous melt was observed in the rapidly cooled sample was used to determine whether the homogeneous melt was formed at a high temperature or whether the sample was in a mixed state of a liquid phase and a solid phase. The results are shown in Table 2 below.

### [Table 2]

**Table 2**

| | Temperature (°C) | Nd₂O₃ (mass%) | CaO (mass%) | Al₂O₃ (mass%) | SiO₂ (mass%) | State |
|---|---|---|---|---|---|---|
| Reference Example 5 | 1450 | 20.4 | 10.0 | 16.6 | 53.0 | L |
| Reference Example 6 | 1450 | 21.6 | 5.0 | 17.5 | 55.9 | L |
| Comparative Reference Example 5 | 1450 | 22.7 | 0.0 | 18.4 | 58.9 | L+S |
| Reference Example 7 | 1400 | 19.3 | 15.0 | 15.7 | 50.0 | L |
| Reference Example 8 | 1400 | 20.4 | 10.0 | 16.6 | 53.0 | L |
| Comparative Reference Example 6 | 1400 | 21.6 | 5.0 | 17.5 | 55.9 | L+S |
| Comparative Reference Example 7 | 1400 | 22.7 | 0.0 | 18.4 | 58.9 | L+S |

From the results shown in Table 2, it is found that when the mass ratio of Nd₂O₃, Al₂O₃, and SiO₂ is Nd₂O₃ : Al₂O₃ : SiO₂ = 22.7 : 18.4 : 58.9 and the temperature of the melt is 1450°C, the liquidus exists within a range where the proportion of CaO to the total mass of Nd₂O₃, CaO, Al₂O₃, and SiO₂ is more than 0.0 mass% and 5.0 mass% or less. Therefore, it was confirmed that a homogeneous melt is formed when the proportion of CaO is at least 5.0 mass% or more (the proportion of the mass of CaO to the total mass of Nd₂O₃ and CaO is at least 18.8 mass% or more) at the composition and the temperature.

Further from the results shown in Table 2, it is found that when the mass ratio of Nd₂O₃, Al₂O₃, and SiO₂ is Nd₂O₃ : Al₂O₃ : SiO₂ = 22.7 : 18.4 : 58.9 and the temperature of the melt is 1400°C, the liquidus exists within a range where the proportion of CaO to the total mass of Nd₂O₃, CaO, Al₂O₃, and SiO₂ is more than 5.0 mass% and 10.0 mass% or less. Therefore, it was confirmed that a homogeneous melt is formed when the proportion of CaO is at least 10.0 mass% or more (the proportion of the mass of CaO to the total mass of Nd₂O₃ and CaO is at least 32.9 mass% or more) at the composition and the temperature. The compositions in Reference Examples 5 to 8 and Comparative Reference Examples 5 to 7 correspond to compositions on the line segment connecting point Z and the vertex (CaO) in the pseudo-quaternary phase diagram shown in Fig. 1.

### [Reference Example 9]

A mixture (1 g in total) obtained by mixing 0.250 g of Nd₂O₃ having a purity of 99.9 mass%, 0.177 g of CaO, 0.109 g of Al₂O₃, and 0.464 g of SiO₂ was used as a sample of this reference example. The mass ratio of Nd₂O₃, Al₂O₃, and SiO₂ in the mixture is Nd₂O₃ : Al₂O₃ : SiO₂ = 30.4 : 13.2 : 56.4. This sample was inserted into an iron crucible having an inner diameter of 8 mm, a thickness of 1 mm, and a height of 50 mm, and heated and held at 1450°C in an air atmosphere for 24 hours in a Kanthal furnace. The sample held for a predetermined time was rapidly cooled by water cooling. The rapidly cooled sample was subjected to microstructural observation with an optical microscope and a scanning electron microscope (SEM), and phase identification with an X-ray diffractometer (XRD). Based on these results, the ability of the CaO flux to dissolve Nd₂O₃ was examined. As a result, since only a vitrified microstructure formed by cooling of the homogeneous melt was observed in the rapidly cooled sample, it was confirmed that the sample of this reference example formed a homogeneous melt at a high temperature.

### [Reference Example 10 and Comparative Reference Examples 8 to 9]

A mixture (1 g in total) obtained by weighing Nd₂O₃ having a purity of 99.9 mass%, CaO, Al₂O₃, and SiO₂ so as to have the composition shown in Table 3 below, followed by mixing was used as a sample of each example. In Reference Example 10 and Comparative Reference Examples 8 to 9, the mass ratio of Nd₂O₃, Al₂O₃, and SiO₂ was substantially the same as the mass ratio in Reference Example 9 (error ± 0.1 mass%). This sample was inserted into an iron crucible having an inner diameter of 8 mm, a thickness of 1 mm, and a height of 50 mm, and heated and held at 1450°C in an air atmosphere for 24 hours in a Kanthal furnace. The sample held for a predetermined time was rapidly cooled by water cooling. The rapidly cooled sample was subjected to microstructural observation with an optical microscope and SEM, and phase identification with XRD. Based on these results, the ability of the CaO flux to dissolve Nd₂O₃ was examined. Whether or not only a vitrified microstructure formed by cooling of the homogeneous melt was observed in the rapidly cooled sample was used to determine whether the homogeneous melt was formed at a high temperature or whether the sample was in a mixed state of a liquid phase and a solid phase.

### [Table 3]

**Table 3**

| | Temperature (°C) | Nd₂O₃ (mass%) | CaO (mass%) | Al₂O₃ (mass%) | SiO₂ (mass%) | State |
|---|---|---|---|---|---|---|
| Reference Example 9 | 1450 | 25.0 | 17.7 | 10.9 | 46.4 | L |
| Reference Example 10 | 1450 | 26.1 | 14.0 | 11.4 | 48.5 | L |
| Comparative Reference Example 8 | 1450 | 27.3 | 10.0 | 11.9 | 50.8 | L+S |
| Comparative Reference Example 9 | 1450 | 30.4 | 0.0 | 13.2 | 56.4 | L+S |

From the results shown in Table 3, it is found that when the mass ratio of Nd₂O₃, Al₂O₃, and SiO₂ is Nd₂O₃ : Al₂O₃ : SiO₂ = 30.4 : 13.2 : 56.4 and the temperature of the melt is 1450°C, the liquidus exists within a range where the proportion of CaO to the total mass of Nd₂O₃, CaO, Al₂O₃, and SiO₂ is more than 10.0 mass% and 14.0 mass% or less. Therefore, it was confirmed that a homogeneous melt is formed when the proportion of CaO is at least 14.0 mass% or more (the proportion of the mass of CaO to the total mass of Nd₂O₃ and CaO is at least 34.9 mass% or more) at the composition and the temperature. The compositions in Reference Examples 9 to 10 and Comparative Reference Examples 8 to 9 correspond to compositions on the line segment connecting point G and the vertex (CaO) in the pseudo-quaternary phase diagram shown in Fig. 1.

### [Reference Example 11]

A mixture (1 g in total) obtained by mixing 0.200 g of Nd₂O₃ having a purity of 99.9 mass%, 0.189 g of CaO, 0.116 g of Al₂O₃, and 0.495 g of SiO₂ was used as a sample of this reference example. The mass ratio of Nd₂O₃, Al₂O₃, and SiO₂ in the mixture is Nd₂O₃ : Al₂O₃ : SiO₂ = 24.7 : 14.3 : 61.0. This sample was inserted into an iron crucible having an inner diameter of 8 mm, a thickness of 1 mm, and a height of 50 mm, and heated and held at 1450°C in an air atmosphere for 24 hours in a Kanthal furnace. The sample held for a predetermined time was rapidly cooled by water cooling. The rapidly cooled sample was subjected to microstructural observation with an optical microscope and a scanning electron microscope (SEM), and phase identification with an X-ray diffractometer (XRD). Based on these results, the ability of the CaO flux to dissolve Nd₂O₃ was examined. As a result, since only a vitrified microstructure formed by cooling of the homogeneous melt was observed in the rapidly cooled sample, it was confirmed that the sample of this reference example formed a homogeneous melt at a high temperature.

### [Reference Example 12, Comparative Reference Example 10]

A mixture (1 g in total) obtained by weighing Nd₂O₃ having a purity of 99.9 mass%, CaO, Al₂O₃, and SiO₂ so as to have the composition shown in Table 4 below, followed by mixing was used as a sample of each example. In Reference Example 12 and Comparative Reference Example 10, the mass ratio of Nd₂O₃, Al₂O₃, and SiO₂ was substantially the same as the mass ratio in Reference Example 11 (error ± 0.1 mass%). This sample was inserted into an iron crucible having an inner diameter of 8 mm, a thickness of 1 mm, and a height of 50 mm, and heated and held at 1450°C in an air atmosphere for 24 hours in a Kanthal furnace. The sample held for a predetermined time was rapidly cooled by water cooling. The rapidly cooled sample was subjected to microstructural observation with an optical microscope and SEM, and phase identification with XRD. Based on these results, the ability of the CaO flux to dissolve Nd₂O₃ was examined. Whether or not only a vitrified microstructure formed by cooling of the homogeneous melt was observed in the rapidly cooled sample was used to determine whether the homogeneous melt was formed at a high temperature or whether the sample was in a mixed state of a liquid phase and a solid phase.

### [Table 4]

**Table 4**

| | Temperature (°C) | Nd₂O₃ (mass%) | CaO (mass%) | Al₂O₃ (mass%) | SiO₂ (mass%) | State |
|---|---|---|---|---|---|---|
| Reference Example 11 | 1450 | 20.0 | 18.9 | 11.6 | 49.5 | L |
| Reference Example 12 | 1450 | 22.2 | 10.0 | 12.9 | 54.9 | L |
| Comparative Reference Example 10 | 1450 | 24.7 | 0.0 | 14.3 | 61.0 | L+S |

From the results shown in Table 4, it is found that when the mass ratio of Nd₂O₃, Al₂O₃, and SiO₂ is Nd₂O₃ : Al₂O₃ : SiO₂ = 24.7 : 14.3 : 61.0 and the temperature of the melt is 1450°C, the liquidus exists within a range where the proportion of CaO to the total mass of Nd₂O₃, CaO, Al₂O₃, and SiO₂ is more than 0.0 mass% and 10.0 mass% or less. Therefore, it was confirmed that a homogeneous melt is formed when the proportion of CaO is at least 10.0 mass% or more (the proportion of the mass of CaO to the total mass of Nd₂O₃ and CaO is at least 31.1 mass% or more) at the composition and the temperature. The compositions in Reference Examples 11 to 12 and Comparative Reference Example 10 correspond to compositions on the line segment connecting point F and the vertex (CaO) in the pseudo-quaternary phase diagram shown in Fig. 1.

### [Reference Example 13]

A mixture (1 g in total) obtained by mixing 0.150 g of Nd₂O₃ having a purity of 99.9 mass%, 0.321 g of CaO, 0.170 g of Al₂O₃, and 0.359 g of SiO₂ was used as a sample of this reference example. The mass ratio of Nd₂O₃, Al₂O₃, and SiO₂ in the mixture is Nd₂O₃ : Al₂O₃ : SiO₂ = 22.1 : 25.0 : 52.9. This sample was inserted into an iron crucible having an inner diameter of 8 mm, a thickness of 1 mm, and a height of 50 mm, and heated and held at 1450°C in an air atmosphere for 24 hours in a Kanthal furnace. The sample held for a predetermined time was rapidly cooled by water cooling. The rapidly cooled sample was subjected to microstructural observation with an optical microscope and a scanning electron microscope (SEM), and phase identification with an X-ray diffractometer (XRD). Based on these results, the ability of the CaO flux to dissolve Nd₂O₃ was examined. As a result, since only a vitrified microstructure formed by cooling of the homogeneous melt was observed in the rapidly cooled sample, it was confirmed that the sample of this reference example formed a homogeneous melt at a high temperature.

### [Reference Example 14, Comparative Reference Example 11]

A mixture (1 g in total) obtained by weighing Nd₂O₃ having a purity of 99.9 mass%, CaO, Al₂O₃, and SiO₂ so as to have the composition shown in Table 5 below, followed by mixing was used as a sample of each example. In Reference Example 14 and Comparative Reference Example 11, the mass ratio of Nd₂O₃, Al₂O₃, and SiO₂ was substantially the same as the mass ratio in Reference Example 13 (error ± 0.1 mass%). This sample was inserted into an iron crucible having an inner diameter of 8 mm, a thickness of 1 mm, and a height of 50 mm, and heated and held at 1450°C in an air atmosphere for 24 hours in a Kanthal furnace. The sample held for a predetermined time was rapidly cooled by water cooling. The rapidly cooled sample was subjected to microstructural observation with an optical microscope and SEM, and phase identification with XRD. Based on these results, the ability of the CaO flux to dissolve Nd₂O₃ was examined. Whether or not only a vitrified microstructure formed by cooling of the homogeneous melt was observed in the rapidly cooled sample was used to determine whether the homogeneous melt was formed at a high temperature or whether the sample was in a mixed state of a liquid phase and a solid phase.

### [Table 5]

**Table 5**

| | Temperature (°C) | Nd₂O₃ (mass%) | CaO (mass%) | Al₂O₃ (mass%) | SiO₂ (mass%) | State |
|---|---|---|---|---|---|---|
| Reference Example 13 | 1450 | 15.0 | 32.1 | 17.0 | 35.9 | L |
| Reference Example 14 | 1450 | 19.9 | 10.0 | 22.5 | 47.6 | L |
| Comparative Reference Example 11 | 1450 | 22.1 | 0.0 | 25.0 | 52.9 | L+S |

From the results shown in Table 5, it is found that when the mass ratio of Nd₂O₃, Al₂O₃, and SiO₂ is Nd₂O₃ : Al₂O₃ : SiO₂ = 22.1 : 25.0 : 52.9 and the temperature of the melt is 1450°C, the liquidus exists within a range where the proportion of CaO to the total mass of Nd₂O₃, CaO, Al₂O₃, and SiO₂ is more than 0.0 mass% and 10.0 mass% or less. Therefore, it was confirmed that a homogeneous melt is formed when the proportion of CaO is at least 10.0 mass% or more (the proportion of the mass of CaO to the total mass of Nd₂O₃ and CaO is at least 33.4 mass% or more) at the composition and the temperature. The compositions in Reference Examples 13 to 14 and Comparative Reference Example 11 correspond to compositions on the line segment connecting point H and the vertex (CaO) in the pseudo-quaternary phase diagram shown in Fig. 1.

### <Recovery of rare earth oxide>

### [Example 1]

Into a graphite crucible (model number: No. 8, maximum processing capacity per batch: 8 kg) manufactured by Nippon Crucible Co., Ltd., 945.8 g of a rotor and 1219.5 g of a stator as wastes containing a rare earth element-containing material and a steel material, and 99.3 g of a carbon additive as a melting point depressant were placed, followed by heating using a high-frequency induction furnace. In the rotor, 110.7 g of a neodymium magnet (magnet 1) as a rare earth element-containing material was inserted, and the composition thereof was Nd: 21.0 mass%, Pr: 5.0 mass%, Dy: 2.5 mass%, Tb: 0.4 mass%, B: 0.95 mass%, and Fe: 70.15 mass%. The composition of the neodymium magnet (magnet 1) was determined by inductively coupled plasma atomic emission spectrometry (ICP-AES) method. The rotor and the stator contained 45.2 g of silicon and 16.0 g of aluminum in total. After the temperature was raised to 1400°C to effect melting, 244 g of iron oxide (Fe₂O₃) was added as an oxidizing agent, and the molten metal (melt) was further stirred with a carbon rod in the atmosphere to sufficiently oxidize the rare earth components, silicon, and aluminum by the iron oxide and oxygen in the air. Thereafter, 18.3 g of calcium oxide (CaO) as an alkaline earth metal oxide was charged, and the molten metal (melt) was stirred with a carbon rod.

After holding for 30 minutes, the crucible was air-cooled, and then REₓO_{y}-CaO-based slag (RE: Nd, Pr, Dy, and Tb), which is a rare earth-enriched phase, and the Fe-C phase were each taken out from the inside of the crucible by cutting. The rare earth oxide mass of the rare earth element-containing material in this example (the total mass of Nd₂O₃, Pr₂O₃, Dy₂O₃, and Tb₂O₃, calculated on the assumption that Nd, Pr, Dy, and Tb contained in the magnet 1 have been oxidized to Nd₂O₃, Pr₂O₃, Dy₂O₃, and Tb₂O₃, respectively), the respective amounts of the oxides of the easily oxidizable metals (SiO₂ and Al₂O₃), and the amount of the alkaline earth metal oxide (CaO) are shown in Table 6 below. The mass ratio of the rare earth oxide mass, Al₂O₃, and SiO₂ was approximately the same as in Reference Examples 5 to 8 and Comparative Reference Examples 5 to 7, and was rare earth oxide mass : Al₂O₃ : SiO₂ = 22.7 : 18.4 : 58.9. The content of the alkaline earth metal oxide was 32.9 mass% with respect to the total sum of the alkaline earth metal oxide mass and the rare earth oxide mass.

### [Table 6]

**Table 6**

| | | Composition | |
|---|---|---|---|
| | | (g) | (mass%) |
| Rare earth oxide mass of rare earth element-containing material | | 37.3 | 20.4 |
| Oxide of easily oxidizable metal | SiO₂ | 96.7 | 53.0 |
| | Al₂O₃ | 30.2 | 16.6 |
| Alkaline earth metal oxide (CaO) | | 18.3 | 10.0 |
| Total | | 182.5 | 100.0 |

The component analysis results of the recovered Fe-C phase are shown in Table 7 below. The amount of residual RE (RE: Nd, Pr, Dy, and Tb) in the Fe-C phase was 0.03 mass% in total with respect to the total mass of the Fe-C phase, indicating that the Fe-C phase contained almost no rare earth elements and it is considered that the rare earth component in the neodymium magnet migrated to the slag phase (rare earth-enriched phase). The composition of the Fe-C phase was determined by ICP-AES method.

### [Table 7]

**Table 7**

| | | | | |
|---|---|---|---|---|
| Nd | Pr | Dy | Tb | Total |
| 0.02 | 0.01 | N.D. | N.D. | 0.03 |

| | | | | |
|---|---|---|---|---|
| (unit: mass%) | | | | |

The recovered rare earth-enriched phase (REₓO_{y}-CaO-based slag) (0.5 g) was subjected to acid leaching with 20 ml of 6 mol/l hydrochloric acid, and a filtrate was obtained by filtration. To the filtrate, 10 ml of a 1 mol/l oxalic acid aqueous solution was added, and the pH was adjusted to 1.8 by adding aqueous ammonia. A precipitate of a rare earth oxalate was obtained by holding the pH-adjusted liquid at 40°C for 1 to 2 hours while stirring. The rare earth oxalate was separated by filtration, and fired at 900°C for 60 minutes in a muffle furnace to obtain a powder containing a rare earth oxide. The analysis results of the powder are shown in Table 8 below. The amount of the rare earth oxide in the powder was 98.6 mass% in total with respect to the total mass of the powder. The composition of the powder was determined by ICP-AES (inductively coupled plasma atomic emission spectrometry) method.

### [Table 8]

**Table 8**

| Nd₂O₃ | Pr₂O₃ | Dy₂O₃ | Tb₂O₃ | Total |
|---|---|---|---|---|
| 69.4 | 20.0 | 8.3 | 0.8 | 98.6 |

| | | | | |
|---|---|---|---|---|
| (unit: mass%) | | | | |

### [Example 2]

Into a graphite crucible (model number: No. 8, maximum processing capacity per batch: 8 kg) manufactured by Nippon Crucible Co., Ltd., 945.8 g of a rotor and 1219.5 g of a stator as wastes containing a rare earth element-containing material, a steel material, and copper, 99.3 g of a carbon additive as a melting point depressant, and 392 g of copper for promoting phase separation were placed, followed by heating using a high-frequency induction furnace. In the rotor, 110.7 g of a neodymium magnet (magnet 1) as a rare earth element-containing material was inserted, and the composition thereof was Nd: 21.0 mass%, Pr: 5.0 mass%, Dy: 2.5 mass%, Tb: 0.4 mass%, B: 0.95 mass%, and Fe: 70.15 mass%. The rotor and the stator contained 45.2 g of silicon, 16.0 g of aluminum, and 323.8 g of copper in total. After the temperature was raised to 1400°C to effect melting, 244 g of iron oxide (Fe₂O₃) was added as an oxidizing agent, and the molten metal (melt) was further stirred with a carbon rod in the atmosphere to sufficiently oxidize the rare earth components, silicon, and aluminum by the iron oxide and oxygen in the air. Thereafter, 18.3 g of calcium oxide (CaO) as an alkaline earth metal oxide was charged, and the molten metal (melt) was stirred with a carbon rod.

After holding for 30 minutes, the crucible was air-cooled, and then REₓO_{y}-CaO-based slag (RE: Nd, Pr, Dy, and Tb), which is a rare earth-enriched phase, the Fe-C phase, and the Cu phase were each taken out from the inside of the crucible by cutting. The rare earth oxide mass of the rare earth element-containing material in this example (the total mass of Nd₂O₃, Pr₂O₃, Dy₂O₃, and Tb₂O₃, calculated on the assumption that Nd, Pr, Dy, and Tb contained in the magnet 1 have been oxidized to Nd₂O₃, Pr₂O₃, Dy₂O₃, and Tb₂O₃, respectively), the respective amounts of the oxides of the easily oxidizable metals (SiO₂ and Al₂O₃), and the amount of the alkaline earth metal oxide (CaO) are shown in Table 9 below. The mass ratio of the rare earth oxide mass, Al₂O₃, and SiO₂ was approximately the same as in Reference Examples 5 to 8 and Comparative Reference Examples 5 to 7, and was rare earth oxide mass : Al₂O₃ : SiO₂ = 22.7 : 18.4 : 58.9. The content of the alkaline earth metal oxide was 32.9 mass% with respect to the total sum of the alkaline earth metal oxide mass and the rare earth oxide mass.

### [Table 9]

**Table 9**

| | | Composition | |
|---|---|---|---|
| | | (g) | (mass%) |
| Rare earth oxide mass of rare earth element-containing material | | 37.3 | 20.4 |
| Oxide of easily oxidizable metal | SiO₂ | 96.7 | 53.0 |
| | Al₂O₃ | 30.2 | 16.6 |
| Alkaline earth metal oxide (CaO) | | 18.3 | 10.0 |
| Total | | 182.5 | 100.0 |

The component analysis results of the recovered Fe-C phase are shown in Table 10 below. The amount of residual RE (RE: Nd, Pr, Dy, and Tb) in the Fe-C phase was 0.02 mass% in total with respect to the total mass of the Fe-C phase, indicating that the Fe-C phase contained almost no rare earth elements and it is considered that the rare earth component in the neodymium magnet migrated to the slag phase (rare earth-enriched phase). The composition of the Fe-C phase was determined by ICP-AES method.

### [Table 10]

**Table 10**

| Nd | Pr | Dy | Tb | Total |
|---|---|---|---|---|
| 0.01 | 0.01 | N.D. | N.D. | 0.02 |

| | | | | |
|---|---|---|---|---|
| (unit: mass%) | | | | |

The component analysis results of the recovered Cu phase are shown in Table 11 below. The amount of residual RE (RE: Nd, Pr, Dy, and Tb) in the Cu phase was 0.05 mass% in total with respect to the total mass of the Cu phase, indicating that the Cu phase contained almost no rare earth elements and it is considered that the rare earth component in the neodymium magnet migrated to the slag phase (rare earth-enriched phase). The composition of the Cu phase was determined by ICP-AES method.

### [Table 11]

**Table 11**

| Nd | Pr | Dy | Tb | Total |
|---|---|---|---|---|
| 0.04 | 0.01 | N.D. | N.D. | 0.05 |

| | | | | |
|---|---|---|---|---|
| (unit: mass%) | | | | |

The recovered rare earth-enriched phase (REₓO_{y}-CaO-based slag) (0.5 g) was subjected to acid leaching with 20 ml of 6 mol/l hydrochloric acid, and a filtrate was obtained by filtration. To the filtrate, 10 ml of a 1 mol/l oxalic acid aqueous solution was added, and the pH was adjusted to 1.8 by adding aqueous ammonia. A precipitate of a rare earth oxalate was obtained by holding the pH-adjusted liquid at 40°C for 1 to 2 hours while stirring. The rare earth oxalate was separated by filtration, and fired at 900°C for 60 minutes in a muffle furnace to obtain a powder containing a rare earth oxide. The analysis results of the powder are shown in Table 12 below. The amount of the rare earth oxide in the powder was 98.0 mass% in total with respect to the total mass of the powder. The composition of the powder was determined by ICP-AES (inductively coupled plasma atomic emission spectrometry) method.

### [Table 12]

**Table 12**

| Nd₂O₃ | Pr₂O₃ | Dy₂O₃ | Tb₂O₃ | Total |
|---|---|---|---|---|
| 68.7 | 20.1 | 8.4 | 0.9 | 98.0 |

| | | | | |
|---|---|---|---|---|
| (unit: mass%) | | | | |

### [Example 3]

Into a graphite crucible (model number: No. 8, maximum processing capacity per batch: 8 kg) manufactured by Nippon Crucible Co., Ltd., 945.8 g of a rotor as a waste containing a rare earth element-containing material and a steel material, 53.6 g of a carbon additive as a melting point depressant, and 30.4 g of silicon dioxide and 4.1 g of aluminum oxide as reagents were placed, followed by heating using a high-frequency induction furnace. In the rotor, 110.7 g of a neodymium magnet (magnet 1) as a rare earth element-containing material was inserted, and the composition thereof was Nd: 21.0 mass%, Pr: 5.0 mass%, Dy: 2.5 mass%, Tb: 0.4 mass%, B: 0.95 mass%, and Fe: 70.15 mass%. The composition of the neodymium magnet (magnet 1) was determined by inductively coupled plasma atomic emission spectrometry (ICP-AES) method. The rotor contained 18.1 g of silicon and 6.4 g of aluminum in total. The total amount of silicon contained in the rotor and the reagents was 32.3 g, and the total amount of aluminum was 8.6 g. After the temperature was raised to 1450°C to effect melting, 192 g of iron oxide (Fe₂O₃) was added as an oxidizing agent, and the molten metal (melt) was further stirred with a carbon rod in the atmosphere to sufficiently oxidize the rare earth components, silicon, and aluminum by the iron oxide and oxygen in the air. Thereafter, 26.4 g of calcium oxide (CaO) as an alkaline earth metal oxide was charged, and the molten metal (melt) was stirred with a carbon rod.

After holding for 30 minutes, the crucible was air-cooled, and then REₓO_{y}-CaO-based slag (RE: Nd, Pr, Dy, and Tb), which is a rare earth-enriched phase, and the Fe-C phase were each taken out from the inside of the crucible by cutting. The rare earth oxide mass of the rare earth element-containing material in this example (the total mass of Nd₂O₃, Pr₂O₃, Dy₂O₃, and Tb₂O₃, calculated on the assumption that Nd, Pr, Dy, and Tb contained in the magnet 1 have been oxidized to Nd₂O₃, Pr₂O₃, Dy₂O₃, and Tb₂O₃, respectively), the respective amounts of the oxides of the easily oxidizable metals (SiO₂ and Al₂O₃), and the amount of the alkaline earth metal oxide (CaO) are shown in Table 13 below. The mass ratio of the rare earth oxide mass, Al₂O₃, and SiO₂ was approximately the same as in Reference Examples 9 to 10 and Comparative Reference Examples 8 to 9, and was rare earth oxide mass : Al₂O₃ : SiO₂ = 30.4 : 13.3 : 56.4. The content of the alkaline earth metal oxide was 41.4 mass% with respect to the total sum of the alkaline earth metal oxide mass and the rare earth oxide mass.

### [Table 13]

**Table 13**

| | | Composition | |
|---|---|---|---|
| | | (g) | (mass%) |
| Rare earth oxide mass of rare earth element-containing material | | 37.3 | 25.0 |
| Oxide of easily oxidizable metal | SiO₂ | 69.2 | 46.4 |
| | Al₂O₃ | 16.3 | 10.9 |
| Alkaline earth metal oxide (CaO) | | 26.4 | 17.7 |
| Total | | 149.2 | 100.0 |

The component analysis results of the recovered Fe-C phase are shown in Table 14 below. The amount of residual RE (RE: Nd, Pr, Dy, and Tb) in the Fe-C phase was 0.02 mass% in total with respect to the total mass of the Fe-C phase, indicating that the Fe-C phase contained almost no rare earth elements and it is considered that the rare earth component in the neodymium magnet migrated to the slag phase (rare earth-enriched phase). The composition of the Fe-C phase was determined by ICP-AES method.

### [Table 14]

**Table 14**

| Nd | Pr | Dy | Tb | Total |
|---|---|---|---|---|
| 0.01 | 0.01 | N.D. | N.D. | 0.02 |

| | | | | |
|---|---|---|---|---|
| (unit: mass%) | | | | |

The recovered rare earth-enriched phase (REₓO_{y}-CaO-based slag) (0.5 g) was subjected to acid leaching with 20 ml of 6 mol/l hydrochloric acid, and a filtrate was obtained by filtration. To the filtrate, 10 ml of a 1 mol/l oxalic acid aqueous solution was added, and the pH was adjusted to 1.8 by adding aqueous ammonia. A precipitate of a rare earth oxalate was obtained by holding the pH-adjusted liquid at 40°C for 1 to 2 hours while stirring. The rare earth oxalate was separated by filtration, and fired at 900°C for 60 minutes in a muffle furnace to obtain a powder containing a rare earth oxide. The analysis results of the powder are shown in Table 15 below. The amount of the rare earth oxide in the powder was 98.7 mass% in total with respect to the total mass of the powder. The composition of the powder was determined by ICP-AES (inductively coupled plasma atomic emission spectrometry) method.

### [Table 15]

**Table 15**

| Nd₂O₃ | Pr₂O₃ | Dy₂O₃ | Tb₂O₃ | Total |
|---|---|---|---|---|
| 68.7 | 19.8 | 8.9 | 1.2 | 98.7 |

| | | | | |
|---|---|---|---|---|
| (unit: mass%) | | | | |

### [Example 4]

Into a graphite crucible (model number: No. 8, maximum processing capacity per batch: 8 kg) manufactured by Nippon Crucible Co., Ltd., 751.6 g of a rotor and 1029.9 g of a stator as wastes containing a rare earth element-containing material and a steel material, 77.8 g of a carbon additive as a melting point depressant, and 42.2 g of aluminum oxide as a reagent were placed, followed by heating using a high-frequency induction furnace. In the rotor, 102.8 g of a neodymium magnet (magnet 2) as a rare earth element-containing material was inserted, and the composition thereof was Nd: 29.2 mass%, Pr: 0.0 mass%, Dy: 1.6 mass%, Tb: 0.5 mass%, B: 0.95 mass%, and Fe: 67.75 mass%. The composition of the neodymium magnet (magnet 2) was determined by inductively coupled plasma atomic emission spectrometry (ICP-AES) method. The rotor and the stator contained 36.4 g of silicon and 12.9 g of aluminum in total. The total amount of silicon contained in the rotor and the reagent was 36.4 g, and the total amount of aluminum was 35.2 g. After the temperature was raised to 1400°C to effect melting, 200.5 g of iron oxide (Fe₂O₃) was added as an oxidizing agent, and the molten metal (melt) was further stirred with a carbon rod in the atmosphere to sufficiently oxidize the rare earth components, silicon, and aluminum by the iron oxide and oxygen in the air. Thereafter, 60.6 g of calcium oxide (CaO) as an alkaline earth metal oxide was charged, and the molten metal (melt) was stirred with a carbon rod.

After holding for 30 minutes, the crucible was air-cooled, and then REₓO_{y}-CaO-based slag (RE: Nd, Pr, Dy, and Tb), which is a rare earth-enriched phase, and the Fe-C phase were each taken out from the inside of the crucible by cutting. The rare earth oxide mass of the rare earth element-containing material in this example (the total mass of Nd₂O₃, Pr₂O₃, Dy₂O₃, and Tb₂O₃, calculated on the assumption that Nd, Pr, Dy, and Tb contained in the magnet 2 have been oxidized to Nd₂O₃, Pr₂O₃, Dy₂O₃, and Tb₂O₃, respectively), the respective amounts of the oxides of the easily oxidizable metals (SiO₂ and Al₂O₃), and the amount of the alkaline earth metal oxide (CaO) are shown in Table 16 below. The mass ratio of the rare earth oxide mass, Al₂O₃, and SiO₂ was approximately the same as in Reference Examples 1 to 4 and Comparative Reference Examples 1 to 4, and was rare earth oxide mass : Al₂O₃ : SiO₂ = 20.6 : 36.6 : 42.8. The content of the alkaline earth metal oxide was 61.8 mass% with respect to the total sum of the alkaline earth metal oxide mass and the rare earth oxide mass.

### [Table 16]

**Table 16**

| | | Composition | |
|---|---|---|---|
| | | (g) | (mass%) |
| Rare earth oxide mass of rare earth element-containing material | | 37.5 | 15.5 |
| Oxide of easily oxidizable metal | SiO₂ | 77.8 | 32.1 |
| | Al₂O₃ | 66.5 | 27.4 |
| Alkaline earth metal oxide (CaO) | | 60.6 | 25.0 |
| Total | | 242.4 | 100.0 |

The component analysis results of the recovered Fe-C phase are shown in Table 17 below. The amount of residual RE (RE: Nd, Pr, Dy, and Tb) in the Fe-C phase was 0.17 mass% in total with respect to the total mass of the Fe-C phase, indicating that the Fe-C phase contained almost no rare earth elements and it is considered that the rare earth component in the neodymium magnet migrated to the slag phase (rare earth-enriched phase). The composition of the Fe-C phase was determined by ICP-AES method.

### [Table 17]

**Table 17**

| Nd | Pr | Dy | Tb | Total |
|---|---|---|---|---|
| 0.17 | - | N.D. | N.D. | 0.17 |

| | | | | |
|---|---|---|---|---|
| (unit: mass%) | | | | |

The recovered rare earth-enriched phase (REₓO_{y}-CaO-based slag) (1 g) was subjected to acid leaching with 20 ml of 6 mol/l hydrochloric acid, and a filtrate was obtained by filtration. To the filtrate, 20 ml of a 1 mol/l oxalic acid aqueous solution was added, and the pH was adjusted to 1.9 by adding aqueous ammonia. A precipitate of a rare earth oxalate was obtained by holding the pH-adjusted liquid at 40°C for 1 to 2 hours while stirring. The rare earth oxalate was separated by filtration, and fired at 900°C for 60 minutes in a muffle furnace to obtain a powder containing a rare earth oxide. The analysis results of the powder are shown in Table 18 below. The amount of the rare earth oxide in the powder was 99.1 mass% in total with respect to the total mass of the powder. The composition of the powder was determined by ICP-AES (inductively coupled plasma atomic emission spectrometry) method.

### [Table 18]

**Table 18**

| Nd₂O₃ | Pr₂O₃ | Dy₂O₃ | Tb₂O₃ | Total |
|---|---|---|---|---|
| 93.1 | - | 4.6 | 1.4 | 99.1 |

| | | | | |
|---|---|---|---|---|
| (unit: mass%) | | | | |

As can be seen from reference examples, comparative reference examples, and examples shown above, a rare earth oxide can be recovered using a boron-free flux according to the recovery method of the present embodiment.

The present application is based on Japanese Patent Application No. 2024-014088 which has been filed in Japan on February 1, 2024, and the disclosure of which is incorporated herein by reference in its entirety.

## Claims

1. A method for recovering a rare earth oxide, with which a rare earth oxide is recovered from a waste containing a rare earth element-containing material, the method comprising:
a melt preparation step (1) of heating and melting the waste together with at least one oxide selected from the group consisting of an alkali metal oxide and an alkaline earth metal oxide, to prepare a melt containing at least a rare earth oxide, the oxide, and an oxide of an easily oxidizable metal; and
a separation step (2) of separating, from the melt, a rare earth-enriched phase, in which a rare earth element is concentrated in the oxide, and an Fe-C phase.

2. The method for recovering a rare earth oxide according to claim 1, wherein a content of the oxide is an amount equal to or greater than a liquidus in a phase diagram determined by a rare earth oxide mass of the rare earth element-containing material and a content of the oxide of the easily oxidizable metal.

3. The method for recovering a rare earth oxide according to claim 1, wherein
the waste further contains copper, and
in the separation step (2), a rare earth-enriched phase, in which a rare earth element is concentrated in the oxide, an Fe-C phase, and a Cu phase are separated from the melt.

4. The method for recovering a rare earth oxide according to claim 1, wherein the oxide of the easily oxidizable metal is aluminum oxide and/or silicon dioxide.

5. The method for recovering a rare earth oxide according to claim 4, wherein the oxide of the easily oxidizable metal is aluminum oxide and silicon dioxide.

6. The method for recovering a rare earth oxide according to claim 5, wherein the oxide is calcium oxide (CaO).

7. The method for recovering a rare earth oxide according to claim 1, wherein the rare earth element-containing material contains a neodymium magnet.

8. The method for recovering a rare earth oxide according to claim 1, wherein the melt preparation step (1) does not include adding a boron-containing substance other than the waste.

9. The method for recovering a rare earth oxide according to claim 1, wherein a content of boron in the melt is 4.3 mass% or less with respect to a total mass of the rare earth element.

10. The method for recovering a rare earth oxide according to claim 6, wherein, with respect to a total sum of the rare earth oxide mass of the rare earth element-containing material, the content of the oxide of the easily oxidizable metal, and the content of the oxide, the proportion of the content of the aluminum oxide is 15.7 to 17.5 mass%, the proportion of the content of the silicon dioxide is 50.0 to 55.9 mass%, and the proportion of the content of the oxide is 5.0 to 15.0 mass%.

11. The method for recovering a rare earth oxide according to claim 6, wherein, with respect to a total sum of the rare earth oxide mass of the rare earth element-containing material, the content of the oxide of the easily oxidizable metal, and the content of the oxide, the proportion of the content of the aluminum oxide is 27.5 to 29.3 mass%, the proportion of the content of the silicon dioxide is 32.1 to 34.2 mass%, and the proportion of the content of the oxide is 20.0 to 25.0 mass%.

12. The method for recovering a rare earth oxide according to claim 6, wherein, with respect to a total sum of the rare earth oxide mass of the rare earth element-containing material, the content of the oxide of the easily oxidizable metal, and the content of the oxide, the proportion of the content of the aluminum oxide is 10.9 to 11.4 mass%, the proportion of the content of the silicon dioxide is 46.4 to 48.5 mass%, and the proportion of the content of the oxide is 14.0 to 17.7 mass%.

13. The method for recovering a rare earth oxide according to claim 6, wherein, with respect to a total sum of the rare earth oxide mass of the rare earth element-containing material, the content of the oxide of the easily oxidizable metal, and the content of the oxide, the proportion of the content of the aluminum oxide is 11.6 to 12.9 mass%, the proportion of the content of the silicon dioxide is 49.5 to 54.9 mass%, and the proportion of the content of the oxide is 10.0 to 18.9 mass%.

14. The method for recovering a rare earth oxide according to claim 6, wherein, with respect to a total sum of the rare earth oxide mass of the rare earth element-containing material, the content of the oxide of the easily oxidizable metal, and the content of the oxide, the proportion of the content of the aluminum oxide is 17.0 to 22.5 mass%, the proportion of the content of the silicon dioxide is 35.9 to 47.6 mass%, and the proportion of the content of the oxide is 10.0 to 32.1 mass%.

15. The method for recovering a rare earth oxide according to claim 1, wherein the melt preparation step (1) sequentially includes steps (1a) to (1c) below:
step (1a): adding a melting point depressant to the waste containing a rare earth element-containing material, aluminum, and silicon, followed by heating and melting to obtain a melt (1a);
step (1b): bringing an oxidizing agent into contact with the melt (1a) to obtain a melt (1b); and
step (1c): adding the oxide to the melt (1b) to obtain a melt (1c).

16. The method for recovering a rare earth oxide according to claim 15, wherein
the melting point depressant is one that depresses the melting point of iron and contains carbon, and
the oxidizing agent is one that oxidizes a rare earth element and contains at least one selected from the group consisting of air, oxygen, carbon dioxide, iron oxide, and a composite oxide containing iron oxide.

17. The method for recovering a rare earth oxide according to claim 1, comprising steps (3a) to (3c) below sequentially after the separation step (2):
step (3a): subjecting the rare earth-enriched phase obtained in the step (2) to a leaching treatment with an acid to obtain a rare earth element leachate;
step (3b): precipitating a rare earth element in the rare earth element leachate as a salt to obtain a precipitate; and
step (3c): heating the precipitate to recover the rare earth element as an oxide.

18. A rare earth-enriched material comprising a rare earth oxide, an oxide of an easily oxidizable metal, and at least one oxide selected from the group consisting of an alkali metal oxide and an alkaline earth metal oxide.

19. The rare earth-enriched material according to claim 18, wherein a content of boron is 4.3 mass% or less with respect to a total mass of a rare earth element.
